(19) Europäisches Patentamt
European Patent Office
Office européen des brevets

(11) **EP 3 800 088 B1**

(12) **EUROPEAN PATENT SPECIFICATION**

(45) Date of publication and mention
of the grant of the patent:
**21.12.2022 Bulletin 2022/51**

(21) Application number: **20176218.4**

(22) Date of filing: **25.05.2020**

(51) International Patent Classification (IPC):
**G06N 3/08** (2006.01)     **G06V 10/82** (2022.01)
**G06V 40/10** (2022.01)    **B60N 2/00** (2006.01)
**B60N 2/66** (2006.01)     **B60N 2/02** (2006.01)
**B60N 2/90** (2018.01)     **B60R 21/015** (2006.01)
**G06N 3/04** (2006.01)     **G06V 20/59** (2022.01)

(52) Cooperative Patent Classification (CPC):
**B60N 2/002; B60N 2/665; B60N 2/914;
B60R 21/01516; G06N 3/0445; G06N 3/0454;
G06V 10/82; G06V 20/593; G06V 40/103;
B60N 2002/0268; G06N 3/0481; G06N 3/08**

(54) **SMART VEHICLE SEAT**

INTELLIGENTER FAHRZEUGSITZ

SIÈGE DE VÉHICULE INTELLIGENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2019 EP 19200673**

(43) Date of publication of application:
**07.04.2021 Bulletin 2021/14**

(73) Proprietor: **Foviatech GmbH
20097 Hamburg (DE)**

(72) Inventors:
• **THYAGARAJAN, Sowmya
22179 Hamburg (DE)**
• **BOTHE, Chandrakant
22523 Hamburg (DE)**
• **BOOPATHI, Muraleetharan
Bhavani Erode
Tamil Nadu (IN)**

(74) Representative: **Schneiders & Behrendt Bochum
Huestraße 23
44787 Bochum (DE)**

(56) References cited:
**GB-A- 2 563 644     US-B2- 10 118 514**

• **LU-QI TAO ET AL: "Graphene-Paper Pressure
Sensor for Detecting Human Motions", ACS
NANO, vol. 11, no. 9, 16 August 2017 (2017-08-16),
pages 8790-8795, XP055761723, ISSN: 1936-0851,
DOI: 10.1021/acsnano.7b02826**
• **SAINATH TARA N ET AL: "Convolutional, Long
Short-Term Memory, fully connected Deep Neural
Networks", 2015 IEEE INTERNATIONAL
CONFERENCE ON ACOUSTICS, SPEECH AND
SIGNAL PROCESSING (ICASSP), IEEE, 19 April
2015 (2015-04-19), pages 4580-4584,
XP033064519, DOI:
10.1109/ICASSP.2015.7178838**

## Description

The invention relates to a method for controlling a smart vehicle seat, in which the pressure distribution on the surface of the vehicle seat is measured by means of pressure sensors, the measurement data are forwarded to a microcontroller, the microcontroller determines the sitting posture on the basis of the measured data and learned knowledge using a neural network module and controls, via valves, an actuator element according to the sitting posture.

US 10,118,514 B2 discloses this type of method. A system for controlling a smart vehicle seat may have a seat base and a backrest, the surfaces of which are provided with pressure sensors, the pressure sensors being connected to a microcontroller via which an actuator element is controllable via a drive unit, whereby the actuator element is adapted to change the surface of the seat base and/or the backrest and wherein the actuator element comprises one or more valves via which one or more airbags are controllable.

The term "airbag" within the meaning of the present invention relates to any flexible bag or cushion, preferably small in size, designed to be inflated variably by gas.Similar systems are known in particular from the automotive and aviation industries. In addition to pressure sensors, other diverse sensors are often used, in particular to monitor the driver's condition and ability to drive. Especially for people who spend a lot of time in such seats, such as professional drivers, tradesman and frequent flyers, it is important to have a certain comfort when sitting. Also for health reasons, it is important to sit ergonomically correct. It is of course useful or even necessary to change the seat adjustment for different sitting postures. Conventionally, this is known in particular in the form of the height adjustment of the seats and the relative position or inclination of the backrest relative to the seat base. Head and neck supports can also be adjusted in height. In addition, actuators are increasingly being used to support individual back parts, in particular in the lumbar region.

In some vehicles, personalized seat adjustment can be semi-automatically adjusted so that a short command is sufficient to correctly set the different parameters to the respective user. This helps when different users regularly use the vehicle seat. Thus, a degree of individualization is achieved. A disadvantage here is that different sitting postures are not considered for a particular user.It is therefore preferable that the vehicle seat not only be personalized but also automatically adjustable in terms of sitting posture so as to enhance both the seating comfort and the ergonomic posture of the user. As described, it may be ergonomically useful to adapt both the surface of the seat base and the surface of the backrest to the respective sitting posture of the user.

It is the object of the invention to develop a method to the effect that the system automatically adapts the sitting postures of a user and the surface of the seat base and the surface of the backrest are adjusted in a flexible and exact fashion depending on the user's posture.

The invention proposes a method for controlling a system of a smart vehicle seat to solve the object of the invention, in which method

- the pressure distribution on the surface of the vehicle seat is measured by means of (preferably flat) pressure sensors,

- the measurement data are forwarded to a microcontroller,

- the microcontroller determines the sitting posture on the basis of the measured data and learned knowledge using an artificial intelligence module,

- and controls via valves an actuator element according to the sitting posture and

- the learned knowledge is based on a record which is processed by means of a recurrent neural network (RNN) and the sitting posture is determined by means of the Softmax-function,

- wherein the data input of the recurrent neural network (RNN) is encoded by a convolutional neural network (CNN).

When determining the current the sitting posture, previous hidden system states are considered and evaluated in coaction with each other.

By encoding in form of convolution the input data can be filtered and reduced to the relevant data, before the determination of the sitting posture.

Furthermore, it is of particular advantage to the user that the sitting posture and/or the actuator settings are retrieved and/or set via a human-machine-interface (HMI). In this case, any HMI known to those skilled in the art is suitable. In particular, wireless HMI via web applications, which can be accessed and operated by the user via a smartphone or tablet, are preferred. In addition, the system may have a fixed interface in the vicinity of the vehicle seat, which may be installed, for example, in the cockpit of a car or at an armrest of an airplane passenger seat.

By means of the airbags, the surfaces of the seat base and of the backrest can be adjusted flexibly and accurately. Via the valves, the airbags can be gradually supplied with a gas (from a suitable pressure source, such as a pressurized gas reservoir or a compressor), or the gas can be discharged from the respective airbag. Another advantage compared to the known servomotors is that the airbags control the contour in a large and homogenous part of the respective surface. In addition, airbags are low-priced compared to servomotors.

The pressure on the surface of the vehicle seat is continuously measured by means of the pressure sensors and the measurement data are forwarded to the microcontroller, so that the adaptation of the vehicle seat takes place without delay. For this purpose, the microcontroller compares the measured pressure data with learned knowledge and uses the comparison to determine in which position the user is located on the vehicle seat in order to subsequently adjust the airbags on the basis of the determined sitting posture.

Advantageously, the airbags in the seat base and in the backrest are integrated below the surface (e.g. below the upholstery cover of the seat). By placing the respective air cushion directly under the contact surface of the vehicle seat, a change in the pressurization of the airbags directly affects the sitting comfort of the user.

The pressure sensors may be designed as graphene sensor arrays. Graphene pressure sensors are particularly well-suited for measuring the pressure distribution on the surface very accurately and thus providing optimal feedback. In addition, the cycle strength is extremely high.

It is particularly practicable if the graphene sensor arrays consist of a plurality of sensor elements, wherein in each sensor element graphene strip conductors are arranged on a substrate. Due to a high density of sensor elements on the respective sensor array, a particularly high accuracy can be achieved. The arrangement of the sensors in the form of printed strip conductors on a substrate makes it possible to realize a very flat sensor array.

Preferably, each single sensor element is smaller than 0.5 mm$^2$, preferably smaller than 0.37 mm$^2$. This makes it possible to achieve a particularly high number of sensor elements on a sensor array and thus a particularly accurate measurement of the pressure distribution.

The invention will be explained in the following in more detail with reference to the drawings.

Figure 1 a-d schematically show a smart vehicle seat of a system in different load conditions, which system may be controlled by a method according to the invention;

Figure 2 schematically shows the structure of a sensor array of a system, which may be controlled by a method according to the invention;

Figure 3 schematically shows the structure of a sensor element of a system, which may be controlled by a method according to the invention;

Figure 4 schematically shows a block diagram of a system, which may be controlled by a method according to the invention;

Figure 5 schematically illustrates an example of the determination of the sitting posture according to a method using a recurrent neural network;

Figure 6 schematically illustrates an example of the determination of the sitting posture according to a method according to the invention.

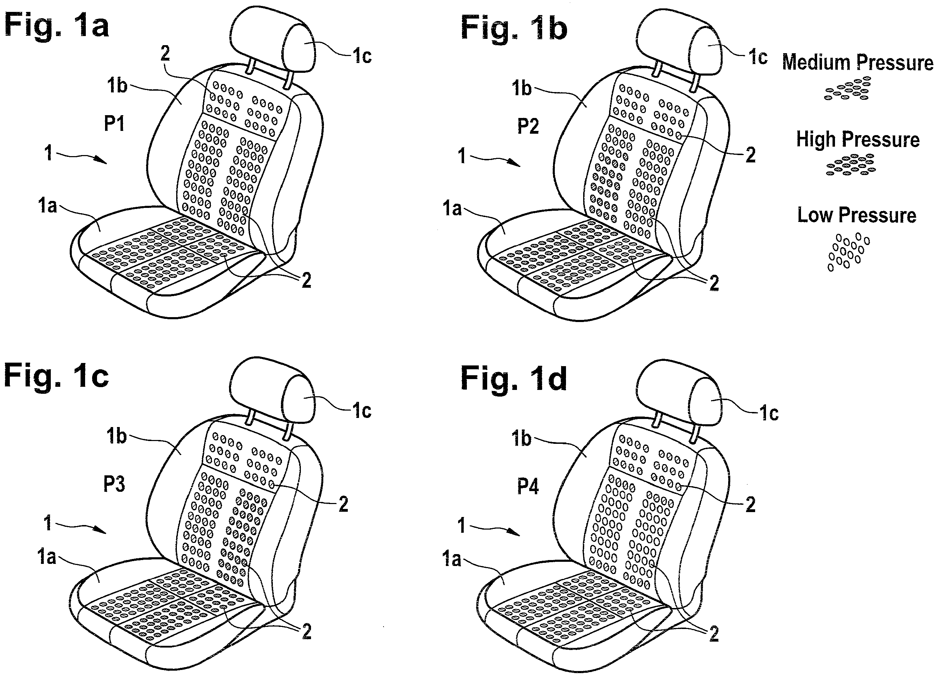

In Figures 1 a-d, a vehicle seat is designated by reference numeral 1. The vehicle seat 1 has a seat base 1a a and a backrest 1b and a headrest 1c. On the surface of the seat base 1a and the user-facing surface of the backrest 1b, a plurality of graphene sensors 2 are arranged. The graphene sensors 2 measure the pressure distribution caused by the user sitting on the vehicle seat 1.

The pressure distribution in Figures 1a-d varies with the sitting posture of the user. Figure 1a shows the balanced pressure distribution (P1) in a straight and upright sitting position (sitting posture P1). In Figure 1b, a higher pressure is measured on the right side because the user has shifted his weight to the right (sitting posture P2). A weight shift to the left is shown in FIG. 1c (sitting position P3). In Figure 1d, the user obviously bends forward because only slight pressure is exerted on the backrest 1b (sitting posture P4). There can be determined four different sitting postures of the user in this embodiment. Practically, the number of sitting postures is of course not limited. In this way, the sitting behavior of the user can be monitored with the graphene sensors 2.

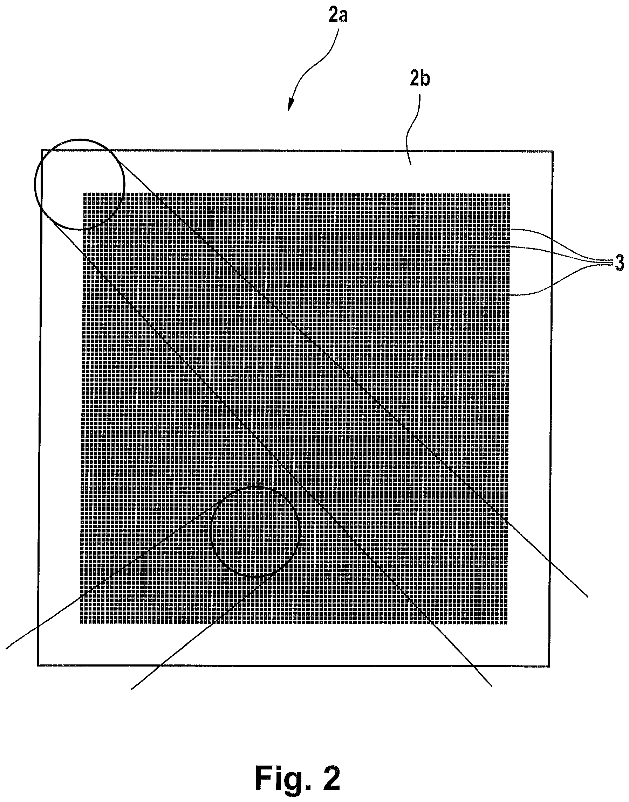

The sensors arranged on the vehicle seat 1 will be described in more detail as follows:
On the surfaces of the vehicle seat 1 flexible sensor arrays 2a are arranged with sensor elements 3 of graphene. Each sensor array 2a has a plurality of sensor elements 3 as shown in figure 2. The sensor elements 3 are printed on PET film 2b of 25 $\mu$m thickness. The size of the sensor array 2a is 300 mm x 300 mm in this embodiment. There 100 x 100 sensor elements 3 arranged on the sensor array 2a. The sensor elements 3 are located 25mm away from the edges at the four corners. Thus, it is possible generate 10000 pressure values.

Each individual sensor element 3 delivers its measured value normalized in the range of 0.0-1.0 for the respective measured pressure. For the realization, large-area sensor arrays of two-dimensional materials are used in this exemplary embodiment. Graphene is used to obtain the desired pressure sensors. Thus, a flexible pressure sensor with a low operating voltage of less than 3,5 V, a high pressure sensitivity of 0 -1 kPa and an excellent mechanical wear resistance over at least 3000 cycles is available.

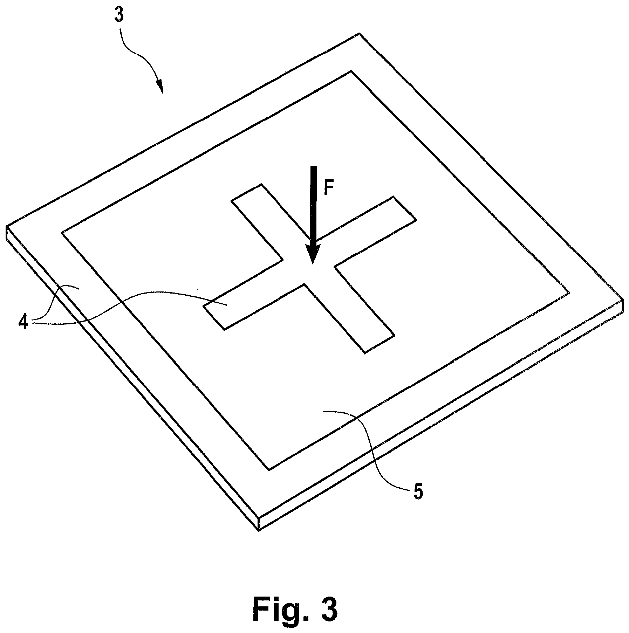

Figure 3 shows a single sensor element 3. A crosswise graphene strip conductor 4 is arranged on a substrate 5. The substrate 5 is, in this embodiment, a PET film 2b. If a force F acts on the substrate 5, this proportionally influences the electrical properties of the graphene strip conductor 4. Consequently, the magnitude of the force F can be determined. The single sensor element 3 is very small and flat. It extends only an area of 0.36 mm$^2$ and a thickness of 25 $\mu$m. The graphene strip conductor 4 is 50 $\mu$m wide. On the graphene strip conductor 4 a voltage supply and an electrode for measuring the output voltage is arranged.

The properties of the PET film 2b as substrate used in this embodiment are as follows:

| | |
|---|---|
| Density: | 1420 kg/m$^3$ |
| Young's modulus: | 2,5 GPa |
| Poisson's ratio | 0,34 |
| Heat capacity: | 1090 J/(kg*K) |
| Thermal conductivity: | 0,12 W//(m*K) |
| Relative permittivity: | 3,4 |
| Resistivity: | 1,5 * 10$^{15}$ $\Omega$m |

The properties of Graphene used in this embodiment are as follows:

| | |
|---|---|
| Density: | 2200 kg/m$^3$ |
| Poisson's ratio: | 0,16 |
| Thermal conductivity: | 5000 W/(m*K) |
| Coefficient | |
| of thermal expansion: | 8 * 10$^{-6}$ 1/K |
| Relative permittivity: | 2,14 |
| Resistivity: | 30 $\Omega$m |
| Electrical conductivity: | 3,333 * 10$^{-2}$ S/m |

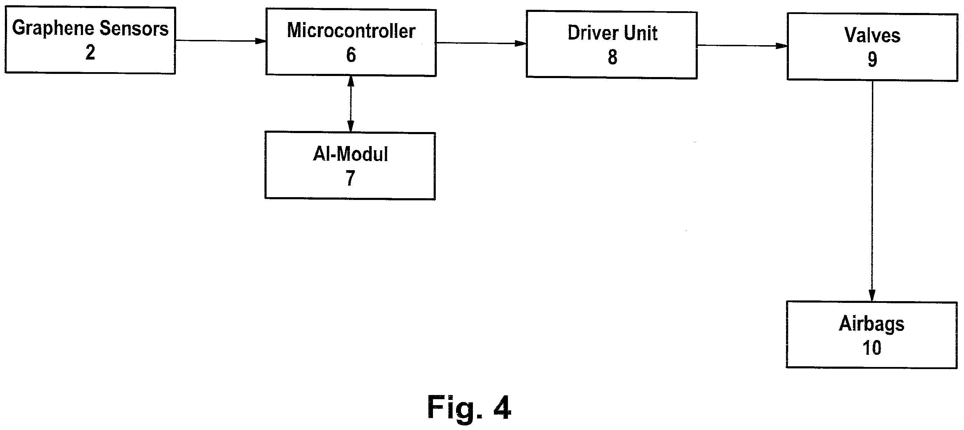

Figure 4 shows a block diagram which schematically illustrates the components of the system, which may be controlled by a method according to the invention, and their interaction, whereby the measured pressure distribution is taken into account.

By means of the graphene sensors 2, the pressure distribution on the vehicle seat 1 is measured. The measured data are forwarded to a microcontroller 6. On the microcontroller 6, an artificial intelligence module 7 is integrated. The artificial intelligence module 7 determines the sitting posture on the basis of the measured data and on learned knowledge. The function of the artificial intelligence module 7 will be discussed in more detail below (see Figure 4). The microcontroller 6 controls via a drive module 8 the valves 9, via which the integrated airbags 10 in the vehicle seat 1 can be pressurized. Which airbag 10 is subjected to how much pressure depends in each case on the sitting posture determined by the artificial intelligence module 7. The microcontroller 6 generates a PWM signal based on the determined sitting posture. Based on the PWM signal, the drive module 8 controls the valves 9.

Ultra-small solenoid air valves with extremely low weight are preferably used as valves 9 for low-pressure airbag controls. The airbags 10 have a very low weight, wherein the connections of the airbags 10 correspond to those of the valves 9. The outer fabric of the airbags 10 are glued to the seat foams of the vehicle seat 1.

The architecture according to the invention of the artificial neural networks which is used in the artificial intelligence module 7 is shown schematically 6.

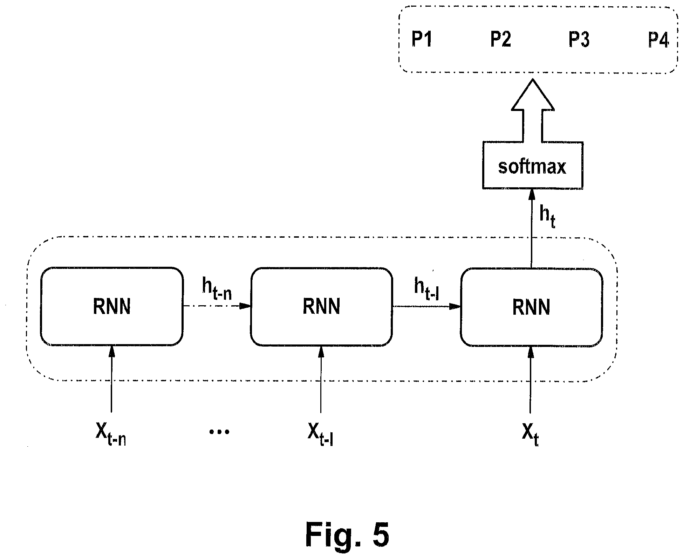

In an architecture, shown in Fig. 5, a recurrent neural network (RNN) is used that can use the previous states (for example xt-1, xt-2 ,...,xtn) and computes the probability distribution of postures ( $P_t$ ) for a given set of data samples. For example, if the time series of size 5 is used , whereby it is possible to read the sensor data with 10 or 15 samples per second, then four data samples are used in the context (which is n ) for predicting the posture of the current data sample xt. When using a RNN, the hidden units of the RNN are calculated differently than in a feedforward neural network (FNN), as RNNs have the ability to keep a memory from the previous states and use them to compute the current internal hidden state such as:

$$h_t=\sigma(I_h*x_t+W_h*h_{t-1}+b_h)$$

where, ht is the hidden internal state of the RNN; $W_h$ is a weight matrix, $L_h$ is an input projection matrix and $b_h$ is a bias vector, all these parameters are learned during training. Once, the internal hidden state is computed, the network use the softmax-function, to calculate the probability distribution of postures ( $P_t$ ):

$$P_t=softmax\ (W_p*h_t+b_p)$$

given

$$P\in(P_1\ ,\ P_2\ ,\ P_3,\ P_4)\ and\ \sum P=1$$

As the data is a time-series and sequential, the RNN method is supposed to provide better performance than a FNN. It is also productive to consider the form of the state values xt as matrices of an image. According to the invention a convolutional neural network (CNNs) is used for encoding the state values and forward them to the RNNs, explained in figure 5.

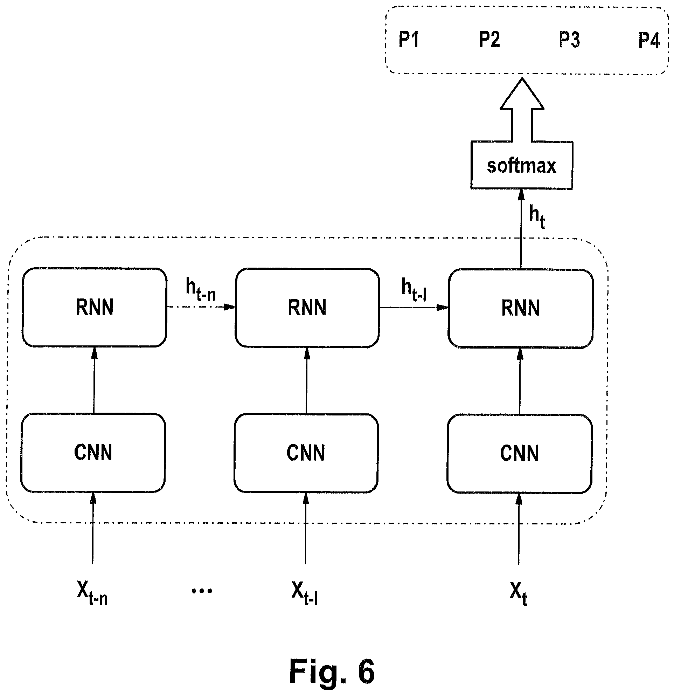

The non-uniform pressure on the seat is expected to provide sparsity in the state values xt, that can make it difficult to feed the data as they are to the RNNs. Hence, according to the invention a convolutional neural network (CNN) is used underneath the RNNs to encode the sensor signal data. As it can be seen that the grid sensor provides an image of the data, like frames at a 100x100 resolution. CNNs are most efficient to extract information from such an input stream of data. When using the CNN layer under the RNN layer, the architecture as shown in Figure 6 can be configured. With this architecture, the CNN is used as an encoder to encode the input and then the encoded (in this case convoluted) input data are fed to the RNN which further uses that encoded data stream for final sitting behavior detection.

In both architectures (figure 5 and figure 6), the Softmax function calculates the probability distribution of possible current sitting postures $(P_1,P_2,P_3,P_4)$ of the user. On the basis of the determined sitting postures $(P_1,P_2,P_3,P_4)$ of the user of the vehicle seat 1, the artificial intelligence module 7 determines the optimum setting of the airbags 10, taking into account ergonomic aspects and a comfort analysis as well as the prediction of the user behavior. Based on the continuous measurement the artificial intelligence module 7 is continuously supplied with information in real time and thus trained further, so that the determination of the current sitting postures $(P_1,P_2,P_3,P_4)$ becomes more and more reliable as a result.

Preferably, the system according to the invention has an interface to a higher-level server and to a user. The interfaces are essentially realized via the microcontroller 6.

Via communication with the higher-level-server, updates can be installed on the microcontroller 6. In addition, information can be shared. Thus, the microcontroller 6 can forward the measurement data regularly to the higher-level server. The higher-level server can then record the measured data from a large number of systems and develop behavioral rules and ergonomic procedures from the information obtained. With the help of these findings, the artificial intelligence module 7 can then be trained again on the microprocessor 6. The function of the artificial intelligence module 7 is improved even faster by providing and combining the data of a plurality of systems.

The user interface allows the user to provide feedback to the system. The user can also manually adjust the airbags 10 or select a preset program for controlling the airbags 10. Ergonomic aspects for supporting particularly back-friendly postures and variations of sitting postures can be taken into account in the given programs. The respective setting of the vehicle seat 1 can for example also be assigned to certain activities, such as "reading", "driving" or "working". Here, too, the respective settings may vary at intervals, taking into account ergonomic aspects. The feedback of the user can also be used to train the artificial intelligence module 7.

In summary, the invention teaches a novel combination of flexible high-sensitivity graphene-pressure-sensors and actuators with the use of artificial neural networks. The method according to the invention makes possible a comfort automation by means of a prediction and analysis of the user behavior. Such a method for a smart vehicle seat is in principle suitable for all seats used in any vehicles for the driver and for passengers. In particular, in the automotive and aviation industries, but also in trains and on ships, methods according to the invention are well suited to be applied for the control of an intelligent vehicle seat.

They are particularly attractive to people who spend a lot of time in vehicles and are therefore dependent on a certain level of comfort and on a support in their usual sitting behavior in order to prevent permanent physical problems, in particular back problems.

List of Reference Numbers:

| | |
|---|---|
| 1 | vehicle seat |
| 1a | seat base |
| 1b | backrest |
| 1c | headrest |
| 2 | graphene sensors |
| 2a | sensor array |
| 2b | PET film |
| 3 | sensor element |
| 4 | graphene conductor strip |
| 5 | substrate |
| 6 | microcontrollers |
| 7 | artificial intelligence module |
| 8 | drive module |
| 9 | valve |
| 10 | airbag |
| $P_1$-$P_4$ | sitting postures |

**Claims**

1. A method for controlling a system of a vehicle seat (1), in which

   - the pressure distribution on the surface of the vehicle seat (1) is measured by means of pressure sensors,
   - the measurement data are forwarded to a microcontroller (6),
   - the microcontroller determines the sitting posture $(P_1,P_2,P_3,P_4)$ on the basis of the measured data and learned knowledge using neural network module
   - and controls via valves (9) an actuator element according the sitting posture $(P_1,P_2,P_3,P_4)$,

     - **characterized in that** the learned knowledge is based on a record which is processed by means of a recurrent neural network (RNN) and the sitting posture $(P_1,P_2,P_3,P_4)$ is determined by means of the Softmax-function,
     - wherein the data input of the recurrent neural network (RNN) is encoded by a convolutional neural network (CNN).

2. The method according to claim 1, **characterized in that** the sitting posture $(P_1,P_2,P_3,P_4)$ and/or the actuator settings are retrieved and/or set via a human-machine-interface (HMI).

3. The method according to any one of claims 1 or 2, **characterized in that** the actuator element comprises airbags (10) integrated in the vehicle seat (1), wherein the valves (9) control the individual pressure in each airbag (10).

## Patentansprüche

1. Verfahren zum Steuern eines Systems eines Fahrzeugsitzes (1), bei dem

   - die Druckverteilung an der Oberfläche des Fahrzeugsitzes (1) mittels Drucksensoren gemessen wird,
   - die Messdaten an einen Mikrocontroller (6) weitergeleitet werden,
   - der Mikrocontroller die Sitzhaltung ($P_1$, $P_2$, $P_3$, $P_4$) auf Grundlage der Messdaten und des erlernten Wissens unter Verwendung eines Neuralen-Netz-Moduls ermittelt,
   - und über Ventile (9) ein Aktuatorelement gemäß der Sitzhaltung ($P_1$, $P_2$, $P_3$, $P_4$) steuert,
   - **dadurch gekennzeichnet, dass** das erlernte Wissen auf einer Aufzeichnung basiert, die mittels eines rekurrenten neuronalen Netzes (RNN) verarbeitet wird und die Sitzhaltung ($P_1$, $P_2$, $P_3$, $P_4$) mittels der Softmax-Funktion ermittelt wird,
   - wobei die die eingegebenen Daten des rekurrenten neuronalen Netzes (RNN) durch ein konvolutionales Neuronales Netz ermittelt werden.

2. Verfahren nach Anspruch 1, **dadurch gekennzeichnet, dass** die Sitzhaltung ($P_1$, $P_2$, $P_3$, $P_4$) und/oder die Aktuatoreinstellungen mittels einer Mensch/Maschine-Schnittstelle (HMI) abgerufen und/oder eingestellt werden.

3. Verfahren nach einem der Ansprüche 1 oder 2, **dadurch gekennzeichnet, dass** das Aktuatorelement in den Fahrzeugsitz (1) integrierte Airbags (10) aufweist, wobei die Ventile (9) den individuellen Druck in jedem Airbag (10) steuern.

## Revendications

1. Procédé permettant de commander un système d'un siège (1) de véhicule, dans lequel

   - la distribution de pression sur la surface du siège (1) de véhicule est mesurée au moyen de capteurs de pression,
   - les données de mesure sont transférées à un microcontrôleur (6),
   - le microcontrôleur détermine la posture assise ($P_1$, $P_2$, $P_3$, $P_4$) en fonction des données mesurées et des connaissances apprises à l'aide d'un module de réseau neuronal,
   - et commande, par l'intermédiaire de soupapes (9), un élément actionneur en fonction de la posture assise ($P_1$, $P_2$, $P_3$, $P_4$),
   - **caractérisé en ce que** les connaissances apprises sont fondées sur un enregistrement traité au moyen d'un réseau neuronal récurrent (RNN), et la posture assise ($P_1$, $P_2$, $P_3$, $P_4$) est déterminée au moyen de la fonction Softmax,
   - l'entrée de données du réseau neuronal récurrent (RNN) étant codifiée par un réseau neuronal convolutif (CNN).

2. Le procédé selon la revendication 1, **caractérisé en ce que** la posture assise ($P_1$, $P_2$, $P_3$, $P_4$) et/ou les paramètres de l'actionneur sont récupérés et/ou réglés par l'intermédiaire d'une interface humain-machine (HMI).

3. Le procédé selon l'une quelconque des revendications 1 ou 2, **caractérisé en ce que** l'élément actionneur comprend des coussins de sécurité gonflables (10) intégrés dans le siège (1) de véhicule, les soupapes (9) régulant la pression individuelle dans chaque coussin de sécurité gonflable (10).

## Fig. 1a

## Fig. 1b

Medium Pressure

High Pressure

Low Pressure

## Fig. 1c

## Fig. 1d

EP 3 800 088 B1

2a

2b

3

**Fig. 2**

**Fig. 3**

```
┌─────────────────┐      ┌─────────────────┐      ┌─────────────────┐      ┌─────────────────┐
│ Graphene Sensors│─────▶│ Microcontroller │─────▶│   Driver Unit   │─────▶│     Valves      │
│        2        │      │        6        │      │        8        │      │        9        │
└─────────────────┘      └─────────────────┘      └─────────────────┘      └─────────────────┘
                                  ▲                                                  │
                                  │                                                  │
                                  ▼                                                  ▼
                         ┌─────────────────┐                               ┌─────────────────┐
                         │    AI-Modul      │                               │    Airbags      │
                         │        7        │                               │       10        │
                         └─────────────────┘                               └─────────────────┘
```

**Fig. 4**

P1      P2      P3      P4

softmax

$h_t$

| RNN | $h_{t-n}$ | RNN | $h_{t-l}$ | RNN |

$X_{t-n}$    ...    $X_{t-l}$        $X_t$

# Fig. 5

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10118514 B2